**Europäisches Patentamt**

**European Patent Office**

**Office européen des brevets**

(19)

(11) Veröffentlichungsnummer: **0 086 875 B1**

(12) **EUROPÄISCHE PATENTSCHRIFT**

(45) Veröffentlichungstag der Patentschrift:
19.02.86

(51) Int. Cl.⁴: **F 16 D 23/06**

(21) Anmeldenummer: **82110052.6**

(22) Anmeldetag: **30.10.82**

(54) Synchronisiervorrichtung zum Synchronisieren zweier um eine gemeinsame Achse drehender Rotationsteile.

(30) Priorität: **13.11.81 US 321139**

(43) Veröffentlichungstag der Anmeldung:
**31.08.83 Patentblatt 83/35**

(45) Bekanntmachung des Hinweises auf die Patenterteilung:
**19.02.86 Patentblatt 86/8**

(84) Benannte Vertragsstaaten:
**AT BE DE FR GB IT NL SE**

(56) Entgegenhaltungen:
**DE - A - 1 755 457**
**DE - A - 1 910 884**
**DE - B - 1 284 309**
**DE - C - 738 514**
**FR - A - 1 332 492**
**GB - A - 1 137 332**
**US - A - 3 286 801**
**US - A - 3 386 302**
**US - A - 4 185 725**

(73) Patentinhaber: **DEERE & COMPANY, 1 John Deere Road, Moline Illinois 61265 (US)**

(72) Erfinder: **Michael, Richard Arlo, 703 Burbank Avenue, Waterloo Iowa 50702 (US)**
Erfinder: **Chaudhari, Dalsang Kanajibhai, 201 Balboa Avenue, Cedar Falls Iowa 50613 (US)**
Erfinder: **Marquart, Gordon LeRoy, P.O. Box 285, Jesup Iowa 50648 (US)**

(74) Vertreter: **Gramm, Werner, Dipl.-Ing., Patentanwälte Gramm + Lins Theodor-Heuss-Strasse 2, D-3300 Braunschweig (DE)**

## Beschreibung

Die Erfindung betrifft eine Synchronisiervorrichtung zum Synchronisieren zweier um eine gemeinsame Achse drehender Rotationsteile, bestehend aus
— einem Muffenträger, der auf dem ersten der beiden Rotationsteile sitzt, mit diesem umläuft und einen gezahnten Aussenumfang aufweist;
— einer Schaltmuffe, die mit einer gezahnten Innenfläche in den gezahnten Aussenumfang des Muffenträgers eingreift und auf diesem axial verschiebbar ist;
— einem Sperring, der neben dem Muffenträger angeordnet und diesem gegenüber axial verschiebbar ist, und eine gezahnte Aussenfläche, eine Reibfläche sowie Klauen für eine begrenzte Drehung zwischen Muffenträger und Sperring aufweist;
— einem Getriebering, der mit dem zweiten Rotationsteil in fester Drehverbindung steht und eine gezahnte Aussenfläche aufweist, die in die gezahnte Innenfläche der Schaltmuffe eingreift, wenn letztere über den Sperring hinweg auf den Getriebering axial verschoben wird;
— Selbstverstärkungsmitteln, die zusammen mit dem Getriebering drehbar und über die Reibfläche des Sperringes kraftschlüssig beaufschlagbar sind, um ein Reibungsdrehmoment zwischen den beiden Rotationsteilen zu übertragen und unter der Wirkung dieses Reibungsdrehmomentes zu expandieren;
— einem Reibungselement, das zwischen Getriebering und den Selbstverstärkungsmitteln wirkt, um bei deren Expansion eine Relativrotation zwischen dem ersten und zweiten Rotationsteil zu verhindern;
— wobei die Reibfläche des Sperringes einen Innenkonus bildet, von dem ein Aussenkonus eines axial verschiebbaren konischen, zu den Selbstverstärkungsmitteln gehörenden Elementes beaufschlagbar ist und wobei
— die Selbstverstärkungsmittel ferner einen Anpressteller umfassen, der mehrere Ausnehmungen aufweist, die mit entsprechenden Ausnehmungen in der gegeüberliegenden Seite des konischen Elementes fluchten, wobei zwischen jedem Paar der Ausnehmungen ein Rollkörper vorgesehen ist, die bei einer Relativrotation zwischen konischem Element und Anpressteller diese beiden Teile axial auseinanderschieben.

Synchronisiervorrichtungen werden beispielsweise in Getrieben von Motorfahrzeugen verwendet, um ein störungsfreies Schalten der verschiedenen Gänge zu ermöglichen. Bei geländegängigen Fahrzeugen müssen die Synchronisiervorrichtungen schwerer ausgelegt sein, um die höheren Trägheitskräfte des Übersetzungsgetriebes sowie der Fahrkupplung aufnehmen zu können. Mit zunehmender Baugrösse und höherem Gewicht dieser Synchronisiervorrichtung ergab sich die Forderung nach einer empfindlicheren Synchronisiervorrichtung, die ohne Vergrösserung ihrer Aussenabmessungen eine erhöhte Energiekapazität aufweist.

Erste Versuche zur Befriedigung dieser Forderung führten zur Herstellung von Synchronisiervorrichtungen mit vergrössertem Oberflächenbereich, der zwar zu einer Vergrösserung der Energiekapazität, jedoch ebenso zu einer Vergrösserung des Raumbedarfs führte, was wiederum wegen des begrenzten Einbauraumes für das Getriebe selbst zu neuen Problemen führte.

Die eingangs erläuterte Synchronisiervorrichtung lässt sich dem US-Patent 4 185 725 entnehmen. Hier wurde bereits versucht, die grosse kraftschlüssige Übertragungsfläche beizubehalten, gleichzeitig aber die Aussenabmessungen der Synchronisiervorrichtung zu verringern. Die Selbstverstärkungsmittel bestehen aus zwei Nockenscheiben, von denen die eine drehfest mit dem Getriebering und die andere drehfest mit dem konischen Element verbunden sind. Das Reibungselement liegt zwischen einer Kupplungsfläche des konischen Elementes und einer Kupplungsfläche des Getrieberinges. Bei Übertragung eines Drehmomentes von dem Innenkonus des Sperringes auf den Aussenkonus des genannten konischen Elementes wird letzteres über die mit ihm verbundene Nockenscheibe axial in Richtung auf den Getriebering verschoben, wobei diese axiale Verschiebekraft von den Rollkörpern zwischen den beiden Nockenscheiben aufgebracht wird. Durch die genannte Axialverschiebung des konischen Elementes verringert sich der Abstand zwischen den vorstehend genannten Kupplungsflächen, bis ein Kraftschluss zwischen dem Reibungselement und dem konischen Element einerseits sowie dem Reibungselement und dem Getriebering andererseits erreicht ist. Die genannte Axialverschiebung des konischen Elementes erfolgt gegen die Wirkung einer sich am Getriebering abstützenden Feder, die bei Abfall des vom Sperring auf das konische Element übertragenen Drehmomentes das konische Element in seine inaktive Stellung zurück verschiebt und dadurch das Reibungselement freigibt. Das Reibungselement greift mit auf seinem Aussenumfang angeordneten Klauen in Schlitze des Sperringes ein, wobei die Schlitze etwas breiter sind als die Klauen, so dass zwischen Reibungselement und Sperring nur eine sehr begrenzte Relativverdrehung möglich ist.

Die deutsche Patentschrift 738 514 offenbart eine Synchronisierungsvorrichtung für Klauenkupplungen. Hier ist eine Lamellenkupplung durch Selbstverstärkungsmittel beaufschlagbar. Die Innenlamellen sowie ein Muffenträger sind mit einer Welle drehfest verbunden, während die Aussenlamellen mit einem Getriebering drehfest verbunden sind.

Die deutsche Offenlegungsschrift 1 733 457 offenbart eine Synchronisier- und Gangschaltvorrichtung, insbesondere für Kraftfahrzeug-Wechselgetriebe, bei der neben einem auf einer Welle lose drehbar, axial unverschiebbar gelagerten Zahnrad ein mit der Welle derhfest verbundener, axial unverschiebbarer Muffenträger angeordnet ist, der eine axial verschiebbare, mit ihm drehfeste, mit Gegenklauen versehene Schaltmuffe trägt. Letztere kann mit einem mit dem Zahnrad verbundenen Kupplungsklauenkranz in Eingriff gebracht werden, wobei in Ausnehmungen des Muffenträgers ein axial verschiebbarer, begrenzt drehbarer, eine kegelige Gegenreibfläche aufweisender Synchronring vorgesehen ist, dessen Gegenreibfläche mit einer konischen Reibfläche am Zahnrad zum Erzielen des Gleichlaufs vor dem Einrücken der Gegenklauen in den Kupplungsklauenkranz zusammenwirkt. Hierzu ist die Verschiebebewegung der Schaltmuffe über radial gerichtete, in radialer Richtung federnd nachgiebige Übertragungsglieder auf den Synchronring übertragbar. Die Anpresskraft wird durch mit dem Synchronring und dem Muffenträger zusammenwirkende Anpresskörper verstärkt. Letztere lagern lose in durch Ausnehmungen des Synchronringes und Ausnehmungen des Muffenträgers gebildeten Käfigen derart, dass bei Drehung des Synchronringes eine axiale Kraftkomponente entsteht. Dabei können die Anpresskörper als Rollen ausgebildet sein, die zwischen je zwei gegeneinander gerichteten Keilflächen am Synchronring und am Muffenträger angeordnet sind. Diese rollenförmigen Anpresskörper bewirken also eine Axialverschiebung zwischen zwei der Synchronisierkomponenten und erhöhen dadurch das Synchronisierdrehmoment.

Keiner der vorstehend erläuterten Lösungsvorschläge konnte jedoch die industrieseitig gestellten Forderungen vollständig erfüllen. Der Erfindung liegt somit die Aufgabe zugrunde, die eingangs erläuterte Synchronisiervorrichtung so zu verbessern, dass sie insbesondere für Übersetzungsgetriebe von Motorfahrzeugen geeignet ist und empfindlicher auf Schaltvorgänge reagiert.

Diese Aufgabe wird gemäss der Erfindung durch folgende Merkmale gelöst:

a) Das Reibungselement wird von dem Muffenträger getragen;

b) der Anpresssteller ist zwischen Getriebering und konischem Element axial verschiebbar angeordnet;

c) zwischen Getriebering und Anpresssteller ist eine Trennscheibe angeordnet, die ein Drehmoment in das konische Element einspeist und mit ihm umläuft;

d) zwischen Anpresssteller und Trennscheibe ist das genannte, diese beiden Teile kraftschlüssig beaufschlagende Reibungselement angeordnet, wobei bei einer durch Axialverschiebung zwischen Sperring und konischem Element bewirkten kraftschlüssigen Verbindung dieser beiden Teile bei unterschiedlicher Rotation von konischem Element und Anpresssteller die Rollkörper den Anpresssteller in Richtung auf den Getriebering drücken und dadurch eine kraftschlüssige Verbindung zwischen Anpresssteller und Reibungselement einerseits sowie zwischen Reibungselement und Trennscheibe andererseits herstellen.

Während bei der eingangs zum Stand der Technik erläuterten Synchronisiervorrichtung das Reibungselement unmittelbar den Getriebering beaufschlagt, der daher mit einer Kupplungsfläche versehen sein muss, wird erfindungsgemäss eine zwischen Getriebering und Reibungselement angeordnete Trennscheibe beaufschlagt, die die auf sie einwirkenden Abbremskräfte unmittelbar in das konische Element einspeist. Dadurch erfolgt bei der erfindungsgemässen Synchronisiervorrichtung die Synchronisierung besonders schnell, wobei das erste Rotationsteil eine geringe Abbremsung, das zweite Rotationsteil jedoch eine Beschleunigung erfahren. Am Getriebering braucht keine Kupplungsfläche vorgesehen zu werden. Dies vereinfach die Fertigung, da sich die Trennscheibe sehr einfach ohne Einhaltung besonderer Toleranzen herstellen und montieren lässt. Dabei unterstützt der Kraftschluss zwischen dem Anpresssteller und dem Reibungselement, das vorzugsweise als Kupplungsreibscheibe ausgebildet ist, die Verringerung der Relativrotation zwischen dem ersten und zweiten Rotationsteil, sowie das konische Element den Sperring kraftschlüssig beaufschlagt.

Die erfindungsgemässe Konstruktion erhöht nicht nur die Energiekapazität der Synchronisiervorrichtung, sondern teilt die Drehmomentübertragung zwischen dem ersten und zweiten Rotationsteil auf zwei separate und voneinander unabhängige Wege auf: Der eine Weg wird gebildet von dem Getriebering über den Anpresssteller, das konische Element, den Sperring und den Muffenträger auf das erste Rotationsteil. Der zweite Weg wird gebildet von dem Getriebering über den Anpresssteller, die Kupplungsreibscheibe und den Muffenträger auf das erste Rotationsteil.

Die neue Synchronisiervorrichtung weist eine erhöhte Drehmoment- und Energiekapazität gegenüber herkömmlichen Ausführungsformen auf. Das eine Kraftschluss erzeugende konische Element sowie die einen Kraftschluss bewirkende Kupplungsreibscheibe führen zu einer empfindlicheren Synchronisation zwischen den beiden Rotationsteilen. Die neue Synchronisiervorrichtung eignet sich insbesondere für Querfeldein-Fahrzeuge.

In der Zeichnung ist eine als Beispiel dienende Ausführungsform der Erfindung dargestellt. Es zeigen:

Fig. 1 einen Längsschnitt durch eine Synchronisiervorrichtung gemäss der Linie 1-1 in den Figuren 4 und 5;

Fig. 2 in verkleinertem Massstab und zum Teil in einer Explosionsdarstellung in Seitenansicht einen Muffenträger mit einer Übertragungseinrichtung zu einer nur im Ausschnitt dargestellten Schaltmuffe;

Fig. 3 einen Ausschnitt der Synchronisierungsvorrichtung in Explosionsdarstellung gemäss den Linien 3-3 der Figuren 2, 4 bis 7, 9, 11 und 12;

Fig. 4 einen Querschnitt gemäss der Linie 4-4 in Fig. 1;

Fig. 5 einen Querschnitt gemäss der Linie 5-5 in Fig. 1 jedoch unter Weglassung der Schaltmuffe;

Fig. 6 die rechte Seitenansicht eines in Fig. 3 dargestellten Sperringes;

Fig. 7 die linke Seitenansicht eines in Fig. 3 dargestellten konischen Elementes;

Fig. 8 in vergrössertem Massstab einen Schnitt gemäss der Linie 8-8 in Fig. 7;

Fig. 9 eine rechte Seitenansicht eines in Fig. 3 dargestellten Anpresstellers;

Fig. 10 in einer Darstellung gemäss Fig. 8 einen Schnitt gemäss der Linie 10-10 in Fig. 9;

Fig. 11 eine linke Seitenansicht einer in Fig. 3 dargestellten Kupplungsreibscheibe;

Fig. 12 eine linke Seitenansicht einer in Fig. 3 dargestellten Trennscheibe und

Fig. 13 in vergrössertem Massstab ein Detail der Fig. 1 mit einer wahlweise vorzusehenden, zur Auf-

rechterhaltung eines Umlaufspieles dienenden Zug-feder zwischen den beiden Sperringen.

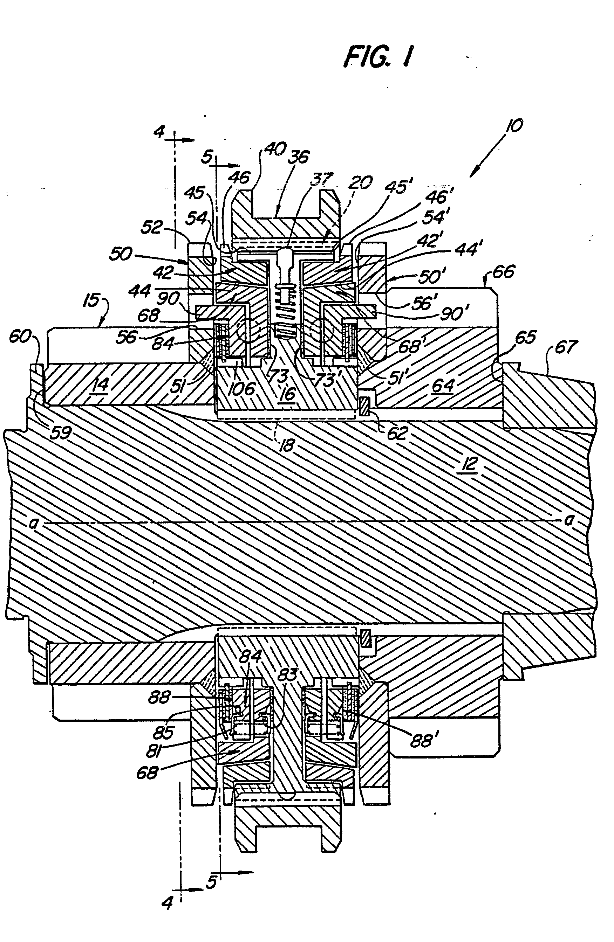

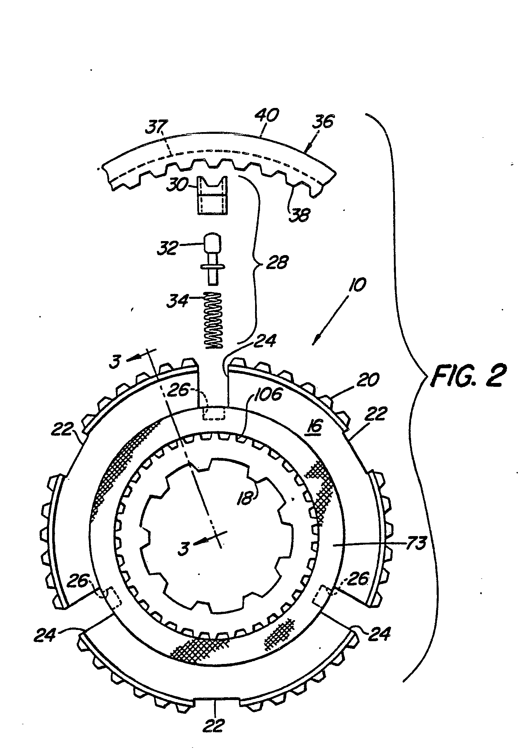

Fig. 1 zeigt eine Synchronisiervorrichtung 10 zur Synchronisierung zweier Rotationsteile 12, 14 oder aber 12, 64, die um eine gemeinsame Achse a-a rotieren. Die Vorrichtung besteht aus einem Muffenträger 16, der von dem ersten Rotationsteil 12 getragen wird und über eine Keilverzahnung 18 in Drehverbindung mit diesem ersten Rotationsteil 12 steht. Der insbesondere in Fig. 2 dargestellte Muffenträger 16 weist einen gezahnten Aussenumfang 20 auf, in dem zwei Gruppen von im gleichen Winkelabstand voneinander angeordneten Nuten 22, 24 vorgesehen sind. Die Nuten 22 der ersten Gruppe sind flach ausgebildet und erstrecken sich über die volle Breite des Muffenträgers 16. Vorzugsweise sind drei derartiger Nuten 22 angeordnet. Auch von den Nuten 24 der zweiten Gruppe sind zumindest drei vorgesehen. Sie sind zwischen den Nuten 22 der ersten Gruppe angeordnet und haben eine erheblich grössere Tiefe; sie erstrecken sich ebenfalls über die gesamte Breite des Muffenträgers 16.

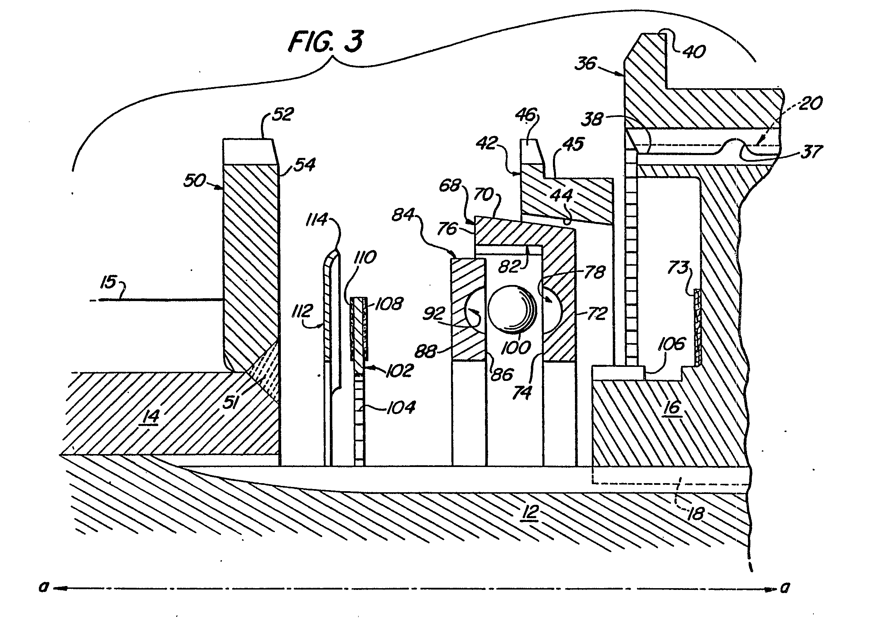

Im Boden jeder Nute 24 ist eine Bohrung 26 vorgesehen, die eine Übertragungseinrichtung 28 aufnimmt. Letztere besteht jeweils aus einem Führungsstück 30, einem Kolben 32 und einer Feder 34. Diese Übertragungseinrichtung erstreckt sich über den Muffenträger 16 hinaus und liegt an einer Schaltmuffe 36 an, die eine gezahnte innere Umfangsfläche 38 aufweist, die in die gezahnte Aussenfläche 20 des Muffenträgers 16 eingreift. In dieser normalen Eingriffsstellung tauchen die Kolben 32 der Übertragungseinrichtung 28 in eine ringförmige Nut 37 ein (siehe Fig. 3), die in der inneren Umfangsfläche 38 der Schaltmuffe 36 angeordnet ist. Die Kolben 32 werden in dieser Nut 37 sowohl von den Führungsstücken 30 als auch von den Federn 34 gehalten, die die Kolben nach aussen drücken.

Die Schaltmuffe 36 weist ferner eine ringförmige Aussenfläche 40 auf, die eine übliche, jedoch nicht dargestellte Schaltgabel aufzunehmen vermag, die zur Axialverschiebung der Schaltmuffe 36 mit Hilfe eines in der Fahrerkabine des Fahrzeugs angeordneten Handhebels dient. Die Verbindung des Handhebels mit der Schaltgabel sowie das Zusammenwirken mit der Schaltmuffe 36 sind einem Durchschnittsfachmann bekannt und werden daher nicht weiter erläutert.

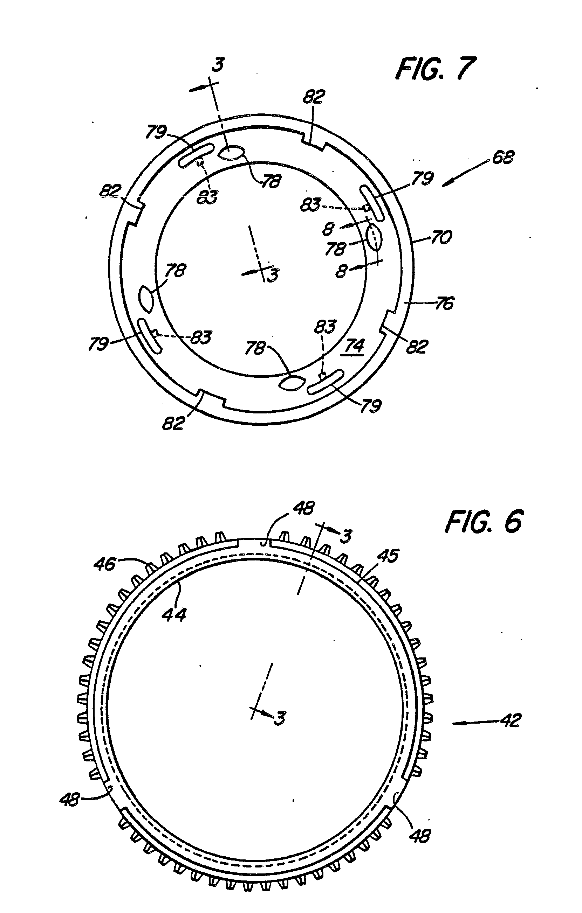

Gemäss Fig. 1 ist auf beiden Seiten des Muffenträgers 16 jeweils ein Sperring 42, 42' angeordnet. Die gemäss Fig. 1 links vom Muffenträger 16 angeordneten Teile sind mit glatten Nummern, die entsprechenden, rechts vom Muffenträger 16 liegenden Teile mit der gleichen Nummer, jedoch mit einem zusätzlichen Strich bezeichnet. Jeder Sperring 42, 42', der am besten in den Figuren 3 und 6 erkennbar ist, weist eine konische innere Reibfläche 44 auf, die sich in Richtung auf den Muffenträger 16 radial verjüngt. Die Neigung beträgt etwa 5° bis 10°, vorzugsweise aber etwa 6,5°, gemessen von der Mittelachse des ersten Rotationsteiles 12. Auf einer zylindrischen Aussenfläche 45, 45' sind abgefaste Zähne 46, 46' angeordnet, deren Aussendurchmesser etwa dem Innendurchmesser der inneren Umfangsfläche 38 der Schaltmuffe 36 entspricht. Daher können die Zähne der Schaltmuffe 36 in die Zähne des Sperringes 42 oder aber 42' eingreifen, wenn die Schaltmuffe 36 axial über einen der beiden Sperringe verschoben wird. Zwischen der inneren Reibfläche 44 und der äusseren Mantelfläche 45 bzw. 44', 45' sind Klauen 48 bzw. 48' angeordnet, die in die Nuten 22 des Muffenträgers 16 eingreifen und die Relativverdrehung zwischen Muffenträger 16 und Sperring 42, 42' begrenzen. Jeder Sperring 42, 42' weist vorzugsweise soviele Klauen 48, 48' auf, wie Nuten 22 im Muffenträger 16 vorgesehen sind.

Seitlich neben dem Sperring 42, 42' sind jeweils gegenüber vom Muffenträger 16 Getrieberinge 50, 50' angeordnet. Gemäss den Figuren 1, 3 und 4 ist der Getriebering 50 über eine Schweissnaht 51 mit dem zweiten Rotationsteil 14 verbunden, während gemäss Fig. 1 der Getriebering 50' über eine Schweissnaht 51' mit dem dritten Rotationsteil 64 in gleicher Weise verbunden ist. Das zweite und dritte Rotationsteil 14, 64 ist jeweils ein Zahnrad mit gezahnter Aussenfläche 15 bzw. 66. Beide Rotationsteile 14, 64 sitzen frei drehbar auf dem ersten Rotationsteil 12 und können unabhängig voneinander rotieren. Das zweite Rotationsteil 14 ist auf seiner linken Seite 59 durch eine Schulter 60 des ersten Rotationsteiles 12 und auf seiner rechten Seite durch den Muffenträger 16 axial festgelegt, der seinerseits gegen eine Axialverschiebung nach rechts durch einen Schnappring 62 festgelegt ist. Das dritte Rotationsteil 64 ist auf seiner rechten Seite 65 durch eine Haltebuchse 67 axial fixiert, die fest mit dem ersten Rotationsteil 12 verbunden ist, beispielsweise durch einen Presssitz.

Gemäss den Figuren 1 und 3 weist der Getriebering 50 eine gezahnte Aussenfläche 52 auf, deren Aussendurchmesser etwa dem Innendurchmesser der inneren Umfangsfläche 38 der Schaltmuffe 36 entspricht. Letztere kann daher mit ihren Innenzähnen in die Zähne des Getrieberinges 50 eingreifen, wenn sie über den Sperring 42 hinweg auf den Getriebering 50 axial verschoben wird. Der Getriebering 50 weist ferner eine dem Muffenträger 16 zugewandte flache Seitenfläche 54 und zumindest eine Ausnehmung 56 auf (siehe Fig. 1), die sich vorzugsweise durch den Getriebering 50 hindurch erstreckt. Vorzugsweise sind vier derartige Ausnehmungen 56 vorgesehen, die im gleichen Winkelabstand voneinander angeordnet sind. Der Getriebering 50' entspricht in seinem Aufbau dem Getriebering 50.

Die Synchronisiervorrichtung 10 umfasst ferner ein konisches Element 68, einen Anpressteller 84, eine Kupplungsreibscheibe 102 sowie eine Trennscheibe 112, die jeweils paketweise auf beiden Seiten des Muffenträgers 16 zwischen Sperring 42, 42' und Getriebering 50, 50' angeordnet sind. Zur Vereinfachung werden lediglich die in Fig. 1 bzw. 3 links vom Muffenträger 16 angeordneten Teile erläutert. Das konische Element 68 ist ein hohler Ring, der koaxial um das erste Rotationsteil 12 angeordnet ist und eine konische äussere Reibfläche 70, eine erste Seitenfläche 72 und abgetreppte zweite und dritte Seitenflächen 74, 76 aufweist. Das konische Element 68 fluchtet mit dem Sperring 42 derart, dass dessen konische innere Reibfläche 44 die konische äussere Reibfläche 70 des konischen Elementes kraftschlüssig beaufschlagen kann, wenn der Sperring 42 axial gegen des konische Element 68 verschoben wird. Die erste Seitenfläche 72 des konischen Elementes 68 kann ferner eine Reibfläche 73 an der Seite des Muffenträgers 16 kraftschlüssig beaufschlagen. Die Reibfläche 73 kann aus jedem bekannten Material mit einem hohen Reibungskoeffizienten bestehen.

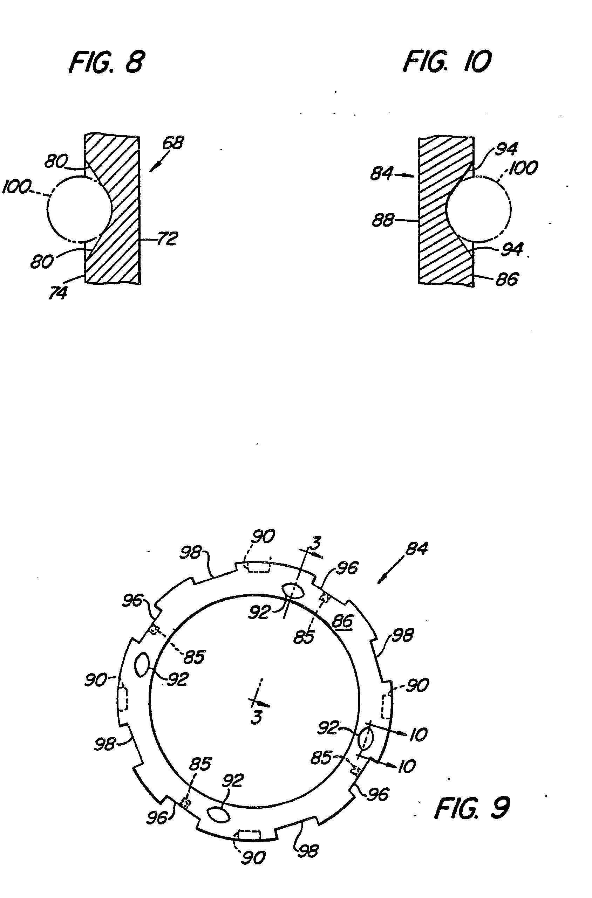

Fig. 7 zeigt eine linke Seitenansicht des konischen Elementes 68. Zu erkennen ist eine Gruppe von etwa zitronenförmig ausgebildeten Ausnehmungen 78 sowie eine Gruppe von schmalen, bogenförmig verlaufenden Schlitzen 79 in der zweiten Seitenfläche 74. Es sind zumindest drei, vorzugsweise aber vier derartige Ausnehmungen und Schlitze vorgesehen, die im gleichen Winkelabstand voneinander angeordnet sind. Die Ausnehmungen 78 haben im Querschnitt die Form eines flachen V (siehe Fig. 8) mit jeweils zwei Auflaufschrägen 80, die sich gegenüberliegen und von der Seitenfläche 74 nach innen um etwa 10° bis 45°, vorzugsweise 20° bis 40°, bei optimaler Ausbildung aber um etwa 35° geneigt sind. Bezogen auf Fig. 3 ragen die Auflaufschrägen 80 in die Bildebene hinein bzw. aus dieser Bildebene heraus und sind ausgerichtet auf die Umlaufbewegung des konischen Elementes 68. Diese Auflaufschrägen 80 ermöglichen einen selbstverstärkenden Betrieb der Synchronisiervorrichtung 10 unabhängig davon, ob das konische Element 68 im Uhrzeigersinn oder entgegen rotiert.

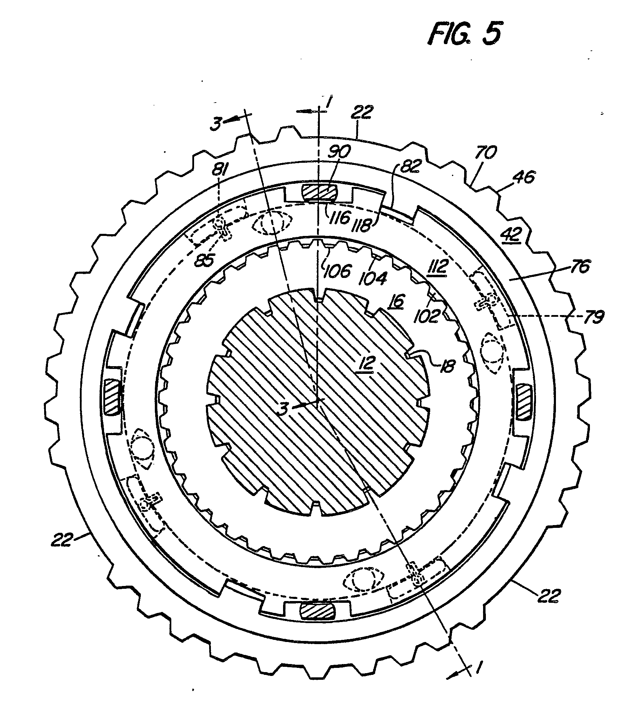

Die gegenüber den Ausnehmungen 78 etwas winkelversetzt angeordneten bogenförmig verlaufenden Schlitze 79 dienen zur teilweisen Aufnahme einer Zugfeder 81 (siehe untere Hälfte der Fig. 1), deren eines Ende in einer Ausnehmung 83 des konischen Elementes 68 und deren anderes Ende in einer entsprechenden Ausnehmung 85 im Anpressteller 84 befestigt sind (siehe auch Fig. 5). Vorzugsweise sind vier derartige Zugfedern 81 vorgesehen, die die beiden Teile 68, 84 ständig gegeneinander ziehen.

Das konische Element 68 weist ferner vorzugsweise vier Klauen 82 auf, die zwischen der Stufe zwischen zweiter und dritter Seitenfläche 74, 76 angeordnet sind und eine Axialverschiebung des Anpresstellers 84 gegenüber dem konischen Element 68 ermöglichen.

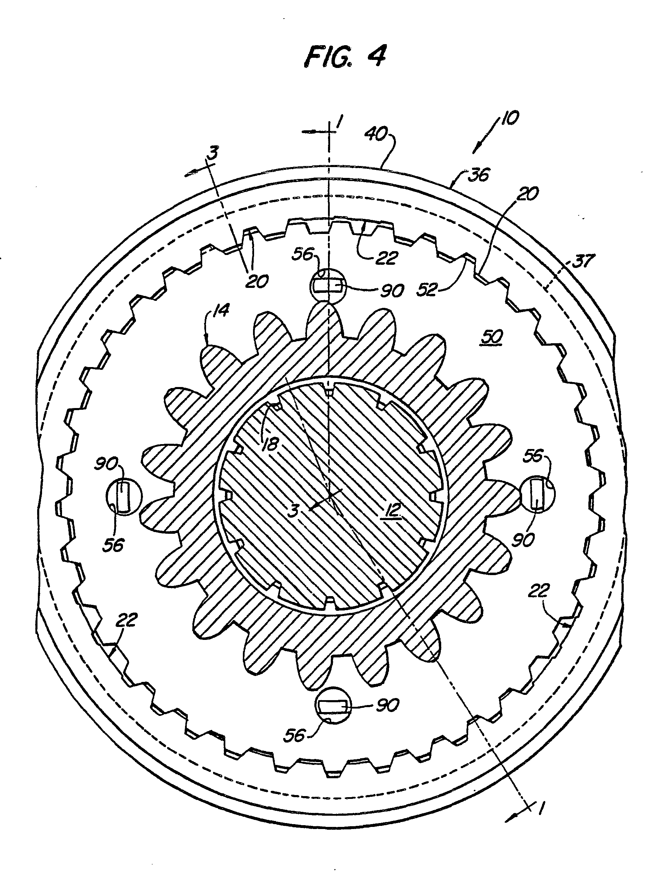

Der in den Figuren 1, 3 und 9 dargestellte Anpressteller 84 umgreift das erste Rotationsteil 12 koaxial, liegt neben der zweiten Seitenfläche 74 des konischen Elementes 68 und weist eine erste und zweite Seitenfläche 86, 88 und zumindest drei, vorzugsweise aber vier im gleichen Winkelabstand voneinander angeordnete Klauen 90 auf. Letztere ragen, wie Fig. 1 erkennen lässt, von der zweiten Seitenfläche 88 in axialer Richtung und greifen in die entsprechenden Ausnehmungen 56 des Getrieberinges 50 ein. Die Breite jeder Klaue 90 entspricht etwa dem Durchmesser jeder Ausnehmung 56 (siehe Fig. 4). Durch diese Klauenverbindung rotiert der Anpressteller 84 synchron mit dem Getriebering 50. Durch die Länge jeder Klaue 90 kann der Anpressteller 84 gegenüber dem Getriebering 50 eine Axialverschiebung ausüben.

Gemäss Fig. 9 sind in der ersten Seitenfläche 86 des Anpresstellers 84 mehrere Ausnehmungen 92 vorgesehen, die hinsichtlich Anzahl, Formgebung und Anordnung den Ausnehmungen 78 im konischen Element 68 entsprechen. Fig. 10 lässt erkennen, dass auch die Ausnehmungen 92 einen der Ausnehmung 78 entsprechenden Querschnitt mit sich gegenüberliegenden Auflaufschrägen 94 mit gleicher Winkelneigung aufweisen. In jedes Paar sich gegenüberliegender Ausnehmungen 78, 92 greift eine Kugel 100 ein, deren Durchmesser grösser ist als die doppelte Tiefe der Ausnehmung 78 bzw. 92. Dadurch weist die erste Seitenfläche 86 des Anpresstellers 84 von der zweiten Seitenfläche 74 des konischen Elementes 68 immer einen gewissen Abstand auf. Sowie eine Relativrotation zwischen dem konischen Element 68 und dem Anpressteller 84 auftritt, laufen die Kugeln 100 zwangsweise auf die Auflaufschrägen 80, 94 ihrer Ausnehmungen 78, 92 auf und bewirken dadurch eine axiale Verschiebung des konischen Elementes 68 gegenüber dem Anpressteller 84. Gleichzeitig aber drücken die Kugeln 100 auch das konische Element 68 mit seiner ersten Seitenfläche 72 gegen die seitliche Reibfläche 73 des Muffenträgers 16. Diese auferzwungenen Axialverschiebungen ergeben sich unabhängig davon, ob sich die Teile 68, 84 im Uhrzeigersinn oder aber entgegen hierzu drehen. Die Kugeln 100 bewirken eine Selbstverstärkung beim Synchronisieren, was später noch im einzelnen erläutert wird.

Im Aussenumfang des Anpresstellers 84 sind zwei Gruppen von Nuten 96, 98 vorgesehen. Die erste Gruppe umfasst zumindest drei, vorzugsweise aber vier im gleichen Winkelabstand voneinander angeordnete Nuten 96, die neben den in der zweiten Seitenfläche 88 vorgesehen Öffnungen 85 liegen. Diese Nuten 96 korrespondieren mit den schmalen, bogenförmig ausgebildeten Schlitzen 79 des konischen Elementes 68 und nehmen teilweise die Zugfedern 81 auf. Die Enden dieser Zugfedern 81 sind in den entsprechenden Ausnehmungen 83, 85 festgelegt, so dass die Achse jeder Feder 81 parallel zur Achse des ersten Rotationsteilers 12 liegt, wie die untere Hälfte der Fig. 1 erkennen lässt. Die zweite Gruppe umfasst zumindest drei, vorzugsweise aber vier Nuten 98, die die Klauen 82 des konischen Elementes 68 aufnehmen. Das Spiel zwischen Klauen 82 und Nuten 98 erlaubt eine Verdrehung des konischen Elementes 68 gegenüber dem Anpressteller 84.

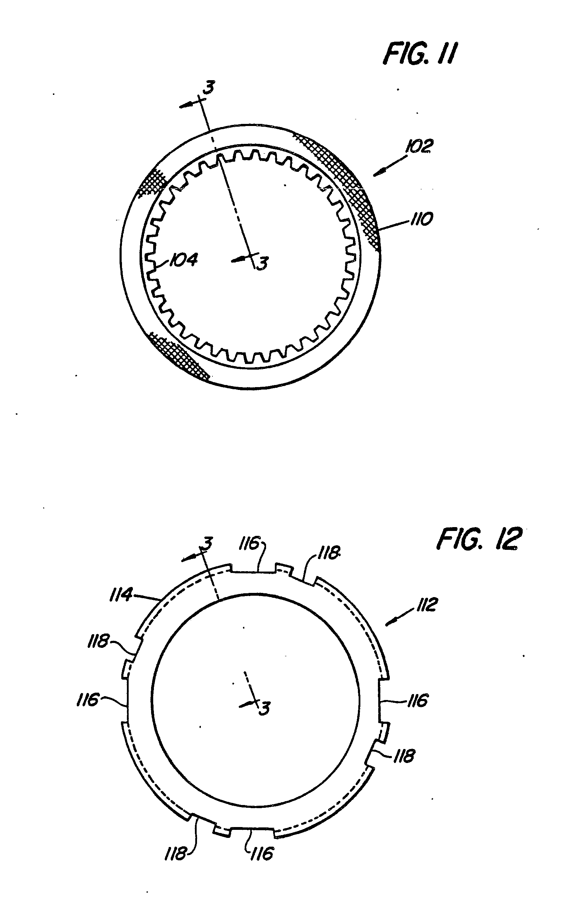

Die Figuren 3 und 11 zeigen am besten die Kupplungsreibscheibe 102, die neben der zweiten Seitenwandung 88 des Anpresstellers 84 liegt, ringförmig ausgebildet ist, das erste Rotationsteil 12 koaxial umgreift und eine gezahnte Innenfläche 104 aufweist, die in eine entsprechend gezahnte Aussenfläche 106 des Muffenträgers 16 eingreift. Daher drehen Muffenträger 16 und Kupplungsreibscheibe 102 ständig synchron. Jedoch kann die Kupplungsreibscheibe 102 gegenüber dem Muffenträger 16 axial verschoben werden.

Die Kupplungsreibscheibe 102 ist auf ihren beiden Seitenflächen mit einem Reibbelag 108, 110 versehen. Der Reibbelag 108 beaufschlagt die zweite Seitenfläche 88 des Anpresstellers 84, wenn die beiden Teile 84, 102 axial gegeneinander geschoben werden, während der Reibbelag 110 die zwischen der Kupplungsreibscheibe 102 und der flachen Seitenfläche 54 des Getrieberinges 50 angeordnete Trennscheibe 112 beaufschlagt, wenn die beiden Teile 102, 112 axial gegeneinander verschoben werden.

Die insbesondere in den Figuren 1, 3, 5 und 12 dargestellte Trennscheibe 112 hat die Form eines dünnen Ringes, der das erste Rotationsteil 12 koaxial umgreift und einen leicht gebogenen Aussenumfang 114 aufweist, in dem zwei Gruppen von Nuten 116, 118 angeordnet sind, die jeweils drei, vorzugsweise aber vier Nuten umfassen. Die Nuten 116 der ersten Gruppe bilden eine Durchtrittsöffnung für die Klauen 90 des Anpresstellers 84, sind aber breiter ausgebildet als die Klauen 90, so dass der Anpressteller 84 gegenüber der Trennscheibe 112 eine begrenzte Umdrehung ausführen kann, wenn die Kugeln 100 aus ihren Ausnehmungen austreten.

Die Nuten 118 der zweiten Gruppe bilden Öffnungen für die Klauen 82 des konischen Elementes (siehe Fig. 5), so dass beim Zusammenbau der Synchronisiervorrichtung 10 der Aussenumfang 114 der Trennscheibe 112 vollständig von dem konischen Element 68 umgriffen wird. Wie bei einer Keilverzahnung erlauben die Klauen 82 eine Axialverschiebung der Trennscheibe 112 gegenüber dem konischen Element 68, sorgen aber gleichzeitig für eine synchrone Drehung der Trennscheibe 112 mit dem konischen Element 68. Dadurch können die sich aus der Beaufschlagung zwischen Trennscheibe 112 und Kupplungsreibscheibe 102 ergebenden Reibungskräfte unmittelbar in das konische Element 68 eingespeist werden.

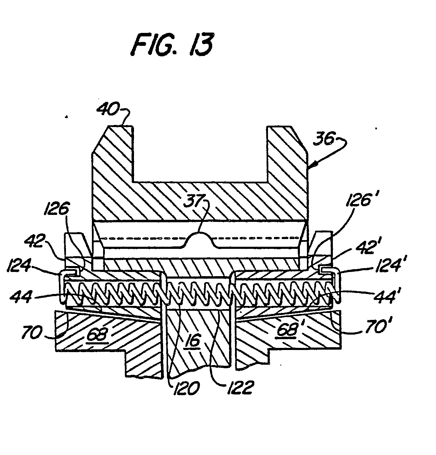

Fig. 13 zeigt wahlweise vorzusehende Zugfedern 120 zwischen den Sperringen 42, 42'. Die drei, vorzugsweise aber vier Zugfedern 120 sind im gleichen Winkelabstand voneinander um den Muffenträger 16 herum angeordnet und ragen durch Bohrungen 122, die fluchtend miteinander durch die Sperringe 42, 42' und den Muffenträger 16 führen. Die Enden 124, 124' jeder Zugfeder 120 greifen in Ausnehmungen 126, 126' ein, die in den äusseren Stirnflächen der beiden Sperringe 42, 42' vorgesehen sind. Die Zugfedern 120 begrenzen die Axialverschiebung der beiden Sperringe 42' 42' voneinander weg und verhindern dadurch Reibungsblockierkräfte, die zwischen der äusseren konischen Reibfläche 70, 70' und den inneren konischen Reibflächen 44, 44' der Teile 68, 68' und 42, 42' auftreten könnten.

Die dargestellte Synchronisiervorrichtung arbeitet wie folgt:

Nachfolgend wird lediglich die Synchronisierung zwischen dem ersten und zweiten Rotationsteil 12, 14 erläutert. Die Synchronisierung zwischen dem ersten und dritten Rotationsteil 12, 64 erfolgt identisch mit der einzigen Ausnahme, dass die Schaltmuffe 36 dann in axialer Richtung auf den Getriebering 50' anstelle des Getrieberinges 50 verschoben wird.

Unter Bezugnahme auf die Figuren 1 bis 5 wird der Vorgang der Synchronisierung beschrieben beginnend mit einer neutralen Stellung der Schaltmuffe 36, in der sie unmittelbar über dem Muffenträger 16 liegt, wie Fig. 1 zeigt. Die Synchronisierung kann unabhängig von der Relativdrehung zwischen erstem und zweitem Rotationsteil 12, 14 erfolgen.

Die Figuren 1 und 3 lassen erkennen, dass Muffenträger 16, Schaltmuffe 36, Sperring 42 und Kupplungsreibscheibe 102 alle mit gleicher Geschwindigkeit und in gleicher Richtung rotieren wie das erste Rotationsteil 12. Denn der Muffenträger 16 ist über die Keilverzahnung 18 mit dem ersten Rotationsteil 12 verbunden; die Schaltmuffe 36 greift mit ihrer inneren gezahnten Umfangsfläche 38 in die gezahnte Aussenfläche 20 des Muffenträgers 12 ein; der Sperring 42 greift mit seinen Klauen 48 in die Nuten 22 des Muffenträgers 16 ein; die Kupplungsreibscheibe 102 sitzt auf der Keilverzahnung 106 des Muffenträgers 16. Die übrigen Teile, nämlich konisches Element 68, Anpressteller 84, Trennscheibe 112 sowie Getriebering 50 rotieren alle mit gleicher Geschwindigkeit und in gleicher Richtung mit dem zweiten Rotationsteil 14. Denn der Getriebering 50 ist über die Schweissnaht 51 permanent mit dem zweiten Rotationsteil 14 verbunden; die Klauen 90 des Anpresstellers 84 ragen durch die Nuten 116 der Trennscheibe 112 hindurch und greifen ständig in die Öffnungen 56 des Getrieberinges 50 ein; die Klauen 82 des konischen Elementes 68 tauchen in die Nuten 98 und 118 des Anpresstellers 84 bzw. der Trennscheibe 112 ein.

Der Synchronisiervorgang beginnt, wenn die Schaltmuffe 36 aus ihrer neutralen Stellung in Richtung auf das zweite Rotationsteil 14 verschoben wird. Hierbei biegt sich die Feder 34 der Übertragungseinrichtung 28 (siehe Fig. 2), damit die Oberseite des Kolbens 32 in der Ringnut 37 der Schaltmuffe 36 verharren kann. Durch die Verschwenkung der Übertragungseinrichtung 28 auf den Federn 34 werden die Führungsstücke 30 in Kontakt gebracht mit der rechten Seite des Sperringes 42, auf den dadurch eine Axialkraft ausgeübt wird. Diese verschiebt den Sperring 42 um den Bruchteil eines Millimeters, so dass die innere konische Reibfläche 44 die äussere Reibfläche 70 des konischen Elementes 68 beaufschlagt. Sowie dies erfolgt, dreht sich der Sperring 42 und damit seine Zähne 46 geringfügig um etwa die halbe Dicke eines Zahnes, so dass die Zähne 46 des Sperringes 42 nicht mehr mit der gezahnten Innenfläche der Schaltmuffe 36 fluchten. Das Mass dieser Verdrehbewegung ergibt sich aus dem Spiel, das die Klauen 48 des Sperringes 42 in den Nuten 22 des Muffenträgers 16 haben. Diese Fehlausrichtung blockiert die Verschiebung der Schaltmuffe 36 über den Sperring 42 auf den Getriebering 50 so lange, bis die beiden Rotationsteile 12, 14 mit gleicher Geschwindigkeit rotieren.

Durch die kraftschlüssige Beaufschlagung des konischen Elementes 68 durch den Sperring 42 ergibt sich eine Rotationsdifferenz zwischen konischem Element 68 und Anpressteller 84. Dieser Geschwindigkeitsunterschied zwingt die Kugeln 100 aus ihren Ausnehmungen 78, 92 heraus auf die Auflaufschrägen 80, 94, wodurch konisches Element 68 und Anpressteller 84 axial um den Bruchteil eines Millimeters auseinandergedrückt werden. Dadurch gelangt die erste Seitenfläche 72 des konischen Elementes 68 in kraftschlüssige Anlage an die Reibfläche 73 des Muffenträgers 16. Gleichzeitig wird aber die zweite Seitenfläche 88 des Anpresstellers 84 gegen den Reibbelag 108 der Kupplungsreibscheibe 102 gedrückt, was wiederum den Reibbelag 110 auf der anderen Seite der Kupplungsreibscheibe in kraftschlüssige Anlage an die Trennscheibe 112 bringt. Letztere speist die von der Kupplungsreibscheibe 102 übertragenen Reibungskräfte zurück in das konische Element 68 ein und zwar über den durch die Klauen 82 und die Nuten 118 gebildeten Formschluss. Dadurch erfährt das erste Rotationsteil 12 eine geringe Abbremsung, während das zweite Rotationsteil 14 etwas beschleunigt wird, bis beide Teile 12, 14 die gleiche Geschwindigkeit aufweisen.

Die Drehmomentkräfte zwischen dem ersten und zweiten Rotationsteil 12, 14 werden über drei separate unabhängige Wege übertragen: Der erste Weg wird gebildet von dem Getriebering 50 über den Anpressteller 84, das konische Element 68, den Sperring 42 und den Muffenträger 16 auf das erste Rotationsteil 12. Der zweite Weg ergibt sich von dem Getriebering 50 über den Anpressteller 84, die Kupplungsreibscheibe 102 und den Muffenträger 16 auf das erste Rotationsteil 12. Der dritte Weg erfolgt von dem Getriebering 50 über den Anpressteller 84, das konische Element 68, den Reibbelag 73 und den Muffenträger 16 auf das erste Rotationsteil 12. Der zweite und dritte Weg bilden Sekundärwege, während der erste Weg den Primärweg darstellt.

Solange die Drehmomente zwischen dem ersten und zweiten Rotationsteil 12, 14 übertragen werden, führt die geringe Axialverschiebung zwischen den verschiedenen Teilen dazu, dass sich das zweite Rotationsteil 14 mit seiner linken Seite 59 unter Kraftschluss gegen die Schulter 60 anlegt (siehe Fig. 1). Dieser kraftschlüssige Kontakt unterstützt die Synchronisierung. Haben das erste und zweite Rotationsteil 12, 14 die gleiche Rotationsgeschwindigkeit, und steht die gezahnte Innenfläche 38 der Schaltmuffe 36 mit den angefasten Zähnen 46 des Sperringes 42 in Kontakt, wird letzterer wieder in Ausrichtung gebracht mit den inneren Zähnen 38 der Schaltmuffe 36. Letztere kann nun über den Sperring 42 hinweg axial verschoben werden bis zum Eingriff mit der gezahnten Aussenfläche 52 des Getrieberinges 50. In dieser Position verbindet die Schaltmuffe 36 den Muffenträger 16 formschlüssig mit dem Getriebering 50 und stellt somit eine mechanische Verbindung zwischen dem ersten und zweiten Rotationsteil 12, 14 her.

Zur Aufhebung der Synchronisierung zwischen dem ersten und zweiten Rotationsteil 12, 14 wird der Fahrer zuerst den Antrieb des ersten Rotationsteiles 12 aufheben beispielsweise durch Betätigung einer üblichen Kupplung und wird dann die Schaltmuffe 36 durch Betätigung des angelenkten Schalthebels nach rechts verschieben in die in Fig. 3 dargestellte Position. Die gezahnte Innenfläche 38 der Schaltmuffe 36 gibt dadurch den Getriebering 50 frei und bewegt sich zurück über den Sperring 42. Das zweite Rotationsteil 14 mit dem daran befestigten Getriebering 50 kann dann mit einer unterschiedlichen Geschwindigkeit gegenüber dem ersten Rotationsteil 12 umlaufen und zwar abhängig von der Ausgangsbelastung und den Zwischenkräften. Sowie die Schaltmuffe 36 auch den Sperring 42 freigibt, wird auch der Kraftschluss zwischen den beiden konischen Flächen 44, 70 aufgehoben, da auf sie keine Drehmomente mehr einwirken. In diesem Augenblick rotiert der Sperring 42 mit dem Muffenträger 16 über den Formschluss zwischen Klauen 48 und Nuten 22; das konische Element 68 beginnt erneut umzulaufen mit der Geschwindigkeit des Getrieberinges 50. Gleichzeitig rollen die Kugeln 100 zurück in ihre Ausnehmungen 78, 82 und erlauben dadurch eine axiale Trennung des konischen Elementes 68 von dem Reibbelag 73, des Anpresstellers 84 vom Reibbelag 108, des Reibbelages 110 von der Trennscheibe 112 sowie der linken Seite 59 des zweiten Rotationsteils 14 von der Schulter 60. Die Kugeln 100 werden in den Boden der zugeordneten Ausnehmungen 78, 92 gedrückt infolge der von den Federn 81 auf das konische Element 68 und den Anpressteller 84 ausgeübten Zugkräfte. Sind auch noch die Federn 120 zwischen den beiden Sperringen 42, 42' angeordnet, unterstützen sie die vorstehend genannte Trennbewegung dadurch, dass sie den Sperring 42 nach rechts ziehen und dadurch den Kraftschluss zwischen den beiden konischen Reibflächen 44, 70 aufheben. Dies beendet den Trennvorgang, so dass das erste und zweite Rotationsteil 12, 14 wieder unabhängig voneinander rotieren können.

Synchronisierung und die Aufhebung erfolgen innerhalb von Sekundenbruchteilen; die Axialverschiebung zwischen den einzelnen Teilen ist minimal und beträgt beispielsweise nur den Bruchteil eines Millimeters.

Für einen Durchschnittsfachmann ergeben sich aus vorstehenden Erläuterungen zahlreiche Möglichkeiten zur Abänderung und Modifizierung im Sinne der Ansprüche.

**Patentansprüche**

1. Synchronisiervorrichtung (10) zum Synchronisieren zweier um eine gemeinsame Achse (a-a) drehender Rotationsteile (12, 14), bestehend aus

— einem Muffenträger (16), der auf dem ersten (12) der beiden Rotationsteile (12, 14) sitzt, mit diesem umläuft und einen gezahnten Aussenumfang (20) aufweist;

— einer Schaltmuffe (36), die mit einer gezahnten Innenfläche (38) in den gezahnten Aussenumfang (29) des Muffenträgers (16) eingreift und auf diesem axial verschiebbar ist;

— einem Sperring (42), der neben dem Muffenträger (16) angeordnet und diesem gegenüber axial verschiebbar ist, und eine gezahnte Aussenfläche (46), eine Reibfläche (44) sowie Klauen (48) für eine begrenzte Drehung zwischen Muffenträger (16) und Sperring (42) aufweist;

— einem Getriebering (50), der mit dem zweiten Rotationsteil (14) in fester Drehverbindung steht und eine gezahnte Aussenfläche (52) aufweist, die in die gezahnte Innenfläche (38) der Schaltmuffe (36) eingreift, wenn letztere über den Sperring (42) hinweg auf den Getriebering (50) axial verschoben wird;

— Selbstverstärkungsmitteln (68, 84, 100, 112), die zusammen mit dem Getriebering (50) drehbar und über die Reibfläche (44) des Sperringes (42) kraftschlüssig beaufschlagbar sind, um ein Reibungsdrehmoment zwischen den beiden Rotationsteilen (12, 14) zu übertragen und unter der Wirkung dieses Reibungsdrehmomentes zu expandieren;

— einem Reibungselement (102), das zwischen Getriebering (50) und den Selbstverstärkungsmitteln (84, 112) wirkt, um bei deren Expansion eine Relativrotation zwischen dem ersten und zweiten Rotationsteil (12, 14) zu verhindern;

— wobei die Reibfläche (44) des Sperringes (42) einen Innenkonus bildet, von dem ein Aussenkonus (70) eines axial verschiebbaren konischen, zu den Selbstverstärkungsmitteln (68, 84, 100, 112) gehörenden Elementes (68) beaufschlagbar ist und wobei

— die Selbstverstärkungsmittel (68, 84, 100, 112) ferner einen Anpressteller (84) umfassen, der mehrere Ausnehmungen (92) aufweist, die mit entsprechenden Ausnehmungen (78) in der gegenüberliegenden Seite (74) des konischen Elementes (68) fluchten, wobei zwischen jedem Paar der Ausnehmungen (78, 92) ein Rollkörper (100) vorgesehen ist, die bei einer Relativrotation zwischen konischem Element (68) und Anpressteller (84) diese beiden Teile axial auseinanderschieben,

gekennzeichnet durch folgende Merkmale:

a) das Reibungselement (102) wird von dem Muffenträger (16) getragen;

b) der Anpressteller (84) ist zwischen Getriebering (50) und konischem Element (68) axial verschiebbar angeordnet;

c) zwischen Getriebering (50) und Anpressteller (84) ist eine Trennscheibe (112) angeordnet, die ein Drehmoment in das konische Element (68) einspeist und mit ihm umläuft;

d) zwischen Anpressteller (84) und Trennscheibe (112) ist das genannte, diese beiden Teile (84, 112) kraftschlüssig beaufschlagende Reibungselement (102) angeordnet, wobei bei einer durch Axialverschiebung zwischen Sperring (42) und konischem Element (68) bewirkten kraftschlüssigen Verbindung dieser beiden Teile (42, 68) bei unterschiedlicher Rotation von konischem Element (68) und Anpressteller (84) die Rollkörper (100) den Anpressteller (84) in Richtung auf den Getriebering (50) drücken und dadurch eine kraftschlüssige Verbindung zwischen Anpressteller (84) und Reibungselement (102) einerseits sowie zwischen Reibungselement (102) und Trennscheibe (112) andererseits herstellen.

2. Vorrichtung nach Anspruch 1, dadurch gekennzeichnet, dass das konische Element (68) eine erste Seitenfläche (72) aufweist, die durch einen Seitenabschnitt (73) des Muffenträgers (16) kraftschlüssig beaufschlagbar ist.

3. Vorrichtung nach Anspruch 1 oder 2, dadurch gekennzeichnet, dass der Anpressteller (84) Mitnehmer (90) aufweist, die eine Drehverbindung zwischen Anpressteller (84) und Getriebering (50) herstellen.

4. Vorrichtung nach Anspruch 3, dadurch gekennzeichnet, dass die genannten Mitnehmer (90) Klauen sind.

5. Vorrichtung nach Anspruch 3 oder 4, dadurch gekennzeichnet, dass die Trennscheibe (112) zumindest eine Nut (116) in ihrem Aussenumfang (114) aufweist, durch die der Mitnehmer (90) des Anpresstellers (84) zum Eingriff in den Getriebering (50) hindurchragt.

6. Vorrichtung nach einem der vorhergehenden Ansprüche, dadurch gekennzeichnet, dass zwischen konischem Element (68) und Anpressteller (84) eine beide Teile (68, 84) gegeneinander ziehende Feder (81) angeordnet ist.

7. Vorrichtung nach einem der vorhergehenden Ansprüche, dadurch gekennzeichnet, dass der Muffenträger (16) auf seinem Aussenumfang mehrere im gleichen Winkelabstand voneinander und parallel zur Mittelachse (a-a) des ersten Rotationsteiles (12) angeordnete Nuten (24) aufweist, in denen jeweils eine Übertragungseinrichtung (28) senkrecht zum gezahnten Aussenumfang (20) des Muffenträgers (16), parallel zu dessen Mittelachse (a-a) sowie senkrecht hierzu verschiebbar angeordnet ist.

8. Vorrichtung nach Anspruch 7, dadurch gekennzeichnet, dass jede Übertragungseinrichtung (28) ein Führungsstück (30), eine Feder (34) sowie einen Kolben (32) aufweist.

9. Vorrichtung nach einem der vorhergehenden Ansprüche, dadurch gekennzeichnet, dass das Reibungselement (102) Reibflächen (108, 110) aufweist, die eine Oberfläche der Trennscheibe (112) bzw. die zweite Seitenfläche (88) des Anpresstellers (84) bei dessen Axialverschiebung kraftschlüssig beaufschlagen.

10. Vorrichtung nach einem der vorhergehenden Ansprüche, dadurch gekennzeichnet, dass das Reibungselement (102) eine Kupplungsreibscheibe ist.

11. Vorrichtung nach Anspruch 10, dadurch gekennzeichnet, dass die Kupplungsreibscheibe (102) mit dem Muffenträger (16) kerbverzahnt und ihm gegenüber axial verschiebbar ist.

12. Vorrichtung nach einem der vorhergehenden Ansprüche, dadurch gekennzeichnet, dass die Klauen (48) des Sperringes (42) in Nuten (22) eingreifen, die im Aussenumfang des Muffenträgers (16) im gleichen Winkelabstand voneinander angeordnet sind.

13. Vorrichtung nach einem der vorhergehenden Ansprüche, dadurch gekennzeichnet, dass die Ausnehmungen (78, 92) im konischen Element (68) bzw. Anpressteller (84) jeweils Auflaufschrägen (80, 94) aufweisen.

14. Vorrichtung nach Anspruch 13, dadurch gekennzeichnet, dass jede Ausnehmung (78, 92) zwei sich gegenüberliegende Auflaufschrägen (80, 94) aufweist.

15. Vorrichtung nach Anspruch 14, dadurch gekennzeichnet, dass die Neigung der Auflaufschrägen (80, 94) 10° bis 45° beträgt gemessen von der zweiten Seitenfläche (74) des konischen Elementes (68) bzw. der ersten Seitenfläche (86) des Anpresstellers (84).

16. Vorrichtung nach Anspruch 15, dadurch gekennzeichnet, dass die genannte Neigung 20° bis 40° beträgt.

17. Vorrichtung nach Anspruch 15 oder 16, dadurch gekennzeichnet, dass die genannte Neigung 35° beträgt.

18. Vorrichtung nach einem der vorhergehenden Ansprüche, dadurch gekennzeichnet, dass die Rollkörper (100) Kugeln sind.

19. Vorrichtung nach Anspruch 18, dadurch gekennzeichnet, dass der Durchmesser der Kugeln (100) grösser ist als die doppelte Tiefe einer der genannten Ausnehmungen (78, 92).

20. Vorrichtung nach einem der vorhergehenden Ansprüche, dadurch gekennzeichnet, dass die konische Reibfläche (70) des konischen Elementes (68) eine Neigung von etwa 5° bis 10° aufweist.

21. Vorrichtung nach Anspruch 20, dadurch gekennzeichnet, dass die genannte Neigung etwa 6,5° beträgt.

22. Vorrichtung nach einem der vorhergehenden Ansprüche, gekennzeichnet durch ein drittes Rotationsteil (64), das koaxial zum ersten Rotationsteil (12) gegenüber dem zweiten Rotationsteil (14) neben dem Muffenträger (16) angeordnet ist, wobei ein Sperring (42'), ein konisches Element (68'), ein Anpressteller (84'), ein Reibungselement (102'), eine Trennscheibe (112'), ein mit dem dritten Rotationsteil (64) verbundener Getriebering (50') sowie mehrere Rollkörper vorgesehen sind, die in sich jeweils gegenüberliegende Ausnehmungen in benachbarten Seitenflächen des konischen Elementes (68') und des Anpressstellers (84') eingreifen, wobei alle diese Teile denen auf der anderen Seite des Muffenträgers (16) entsprechen und eine Synchronisierung zwischen dem ersten und dritten Rotationsteil (12, 64) ermöglichen.

23. Vorrichtung nach Anspruch 22, dadurch gekennzeichnet, dass zwischen den beiden Sperringen (42, 42') Federn (120) gespannt sind, die eine axiale Verschiebung beider Sperringe voneinander weg verhindern.

24. Vorrichtung nach Anspruch 23, dadurch gekennzeichnet, dass die Federn (120) sich durch Bohrungen (122) im Muffenträger (16) und beiden Sperrringen (42, 42') erstrecken und mit ihren Enden (124, 124') jeweils an der äusseren Seitenfläche der beiden Sperringe festgelegt sind.


**Revendications**

1. Dispositifs de synchronisation (10) pour la synchronisation de deux organes rotatifs (12, 14) tournant autour d'un axe commun (a-a), constitué par:
— un porte-baladeur (16) qui est monté sur le premier (12) des deux organes rotatifs (12, 14), qui tourne avec celui-ci et qui présente une périphérie extérieure dentée (20);
— un baladeur d'accouplement (36), qui engrène par une surface intérieure dentée (38) avec la périphérie extérieure dentée (20) du porte-baladeur (16) et qui peut coulisser axialement sur celui-ci;
— une bague de verrouillage (42), qui est disposée à côté du porte-baladeur (16) et qui est déplaçable axialement par rapport à celui-ci, cette bague comportant une surface extérieure dentée (46), une surface de friction (44), ainsi que des crabots ou griffes (48) permettant un déplacement angulaire limité entre le porte-baladeur (16) et la bague de verrouillage (42);
— une bague de transmission (50), qui est calée angulairement sur le second organe rotatif (14) et qui comporte une surface extérieure dentée (52) s'engageant dans la surface intérieure dentée (38) du baladeur (36) quand ce dernier est amenée par coulissement axial sur la bague de transmission (50), en passant sur la bague de verrouillage (42);
— des moyens d'auto-amplification (68, 84, 100, 112) qui peuvent tourner avec la bague de transmission (50) et qui peuvent être soumis à une sollicitation par friction par l'intermédiaire de la surface de friction (44) de la bague de verrouillage (42), afin de transmettre un couple de friction entre les deux organes rotatifs (12, 14) et subir une expansion sous l'effet de ce couple de friction;
— un élément de friction (102) qui agit entre la bague de transmission (50) et les moyens d'auto-amplification (84, 112), afin d'empêcher, lors de leur expansion, une rotation relative entre le premier et le second organes rotatifs (12, 14);
— la surface de friction (44) de la bague de verrouillage (42) formant un cône intérieur qui peut attaquer un cône extérieur (70) prévu sur un élément conique (68) déplaçable axialement, faisant partie des moyens d'auto-amplification (68, 84, 100, 112); et
— les moyens d'auto-amplification (68, 84, 100, 112) comportant en outre un plateau de pression (84) qui présente plusieurs cavités (92), lesquelles sont alignées avec des cavités correspondantes (78) prévues dans le côté opposé (74) de l'élément conique (68), un organe de roulement (100) étant disposé entre chaque paire de cavités (78, 92), cet organe agissant, lors d'une rotation relative entre l'élément conique (68) et le plateau de pression (84), pour repousser axialement ces deux éléments à l'écart l'un de l'autre,
caractérisé par les particularités suivantes:
a) l'élément de friction (102) est porté par le porte-baladeur (16);
b) le plateau de pression (84) est disposé de façon à pouvoir se déplacer axialement entre la bague de transmission (50) et l'élément conique (68),
c) il est prévu entre la bague de transmission (50) et le plateau de pression (84) un disque de séparation (112) qui fournit un couple à l'élément conique (68) et qui tourne avec lui;
d) l'élément de friction (102) précité, agissant par friction sur le plateau de pression (84) et sur le disque de séparation (112), est disposé entre ces deux éléments (84, 112), de sorte que lorsqu'une liaison par friction est réalisée, lors d'un déplacement axial entre la bague de verrouillage (42) et l'élément conique (68), entre ces deux éléments (42, 68), en cas de rotation différentielle de l'élément conique (68) et du plateau de pression (84) les organes de roulement (100) repoussent le plateau de pression (84) en direction de la bague de transmission (50) et établissent ainsi une liaison par friction entre le plateau de pression (84) et l'élément de friction (102), d'une part, et entre l'élément de friction (102) et le disque de séparation (112), d'autre part.

2. Dispositif suivant la revendication 1, caractérisé en ce que l'élément conique (68) comporte une première surface latérale (72) qui peut être attaquée par friction par une zone latérale (73) du porte-baladeur (16).

3. Dispositif suivant la revendication 1 ou 2, caractérisé en ce que le plateau de pression (84) présente des éléments d'entraînement (90) qui établissent une liaison en rotation entre le plateau de pression (84) et la bague de transmission (50).

4. Dispositif suivant la revendication 3, caractérisé en ce que les éléments d'entraînement (90) précités sont constitués par des griffes ou crabots.

5. Dispositif suivant la revendication 3 ou 4, caractérisé en ce que le disque de séparation (112) présente dans sa périphérie extérieure (114) au moins une rainure (116) à travers laquelle l'élément d'entraînement (90) du plateau de pression (84) fait saillie pour s'engager dans la bague de transmission (50).

6. Dispositif suivant l'une quelconque des revendications précédentes, caractérisé en ce qu'il est prévu, entre l'élément conique (68) et le plateau de pression (84), un ressort (81) appliquant les deux éléments (68, 84) l'un contre l'autre par traction.

7. Dispositif suivant l'une quelconque des revendications précédentes, caractérisé en ce que le porte-baladeur (16) présente sur sa périphérie extérieure plusieurs rainures (24) disposées selon un écartement angulaire uniforme et s'étendant parallèlement à l'axe médian (a-a) du premier organe rotatif (12), un dispositif de transmission (28) s'engageant chaque fois dans ces rainures étant disposé perpendiculairement à la périphérie extérieure dentée (20) du porte-baladeur (16) et pouvant se déplacer parallèlement à son axe médian (a-a) ainsi que perpendiculairement à celui-ci.

8. Dispositif suivant la revendication 7, caractérisé en ce que chaque dispositif de transmission (28) comporte une pièce de guidage (30), un ressort (34), ainsi qu'un poussoir (32).

9. Dispositif suivant l'une quelconque des revendications précédentes, caractérisé en ce que l'élément de friction (102) comporte des surfaces de friction (108, 110) agissant par friction sur une surface du disque de séparation (112) ou sur la seconde surface latérale (88) du plateau de pression (84) lors de son déplacement axial.

10. Dispositif suivant l'une quelconque des revendications précédentes, caractérisé en ce que l'élément de friction (102) est constitué par un disque de friction d'accouplement.

11. Dispositif suivant la revendication 10, caractérisé en ce que le disque de friction d'accouplement (102) est muni, ainsi que le porte-baladeur (16), d'une denture formée par taille, et est déplaçable axialement par rapport à lui.

12. Dispositif suivant l'une quelconque des revendications précédentes, caractérisé en ce que les griffes ou crabots (48) de la bague de verrouillage (42) s'engagent dans des rainures (22) qui sont prévues dans la périphérie extérieure du porte-baladeur (16) selon un même écartement angulaire.

13. Dispositif suivant l'une quelconque des revendications précédentes, caractérisé en ce que les cavités (78, 92) prévues dans l'élément conique (68) et dans le plateau de pression (84) respectivement comportent chaque fois des rampes d'attaque (80, 94).

14. Dispositif suivant la revendication 13, caractérisé en ce que chaque cavité (78, 92) comporte deux rampes d'attaque opposées l'une à l'autre (80, 94).

15. Dispositif suivant la revendication 14, caractérisé en ce que la pente des rampes d'attaques (80, 94) est comprise entre 10° et 45° lorsqu'on la mesure à partir de la seconde face latérale (74) de l'élément conique (68) ou de la première face latérale (86) du plateau de pression (84).

16. Dispositif suivant la revendication 15, caractérisé en ce que la pente précitée est comprise entre 20° et 40°.

17. Dispositif suivant la revendication 15 ou 16, caractérisé en ce que la pente précitée est égale à 35°.

18. Dispositif suivant l'une quelconque des revendications précédentes, caractérisé en ce que les organes de roulement (100) sont formés par des billes.

19. Dispositif suivant la revendication 18, caractérisé en ce que le diamètre des billes (100) est supérieur au double de la profondeur de l'une des cavités précitées (78, 92).

20. Dispositif suivant l'une quelconque des revendications précédentes, caractérisé en ce que les surfaces de friction coniques (70) de l'élément conique (68) présentent une pente allant de 5° à 10° environ.

21. Dispositif suivant la revendication 20, caractérisé en ce que la pente précitée est d'environ 6,5°.

22. Dispositif suivant l'une quelconque des revendications précédentes, caractérisé par un troisième organe rotatif (64), qui est disposé coxialement au premier organe rotatif (12), à l'opposé du second organe rotatif (14), à côté du porte-baladeur (16), une bague de verrouillage (42'), un élément conique (68'), un plateau de pression (84'), un élément de friction (102'), un disque de séparation (112'), une bague de transmission (50') reliée à ce troisième organe rotatif (64), ainsi que plusieurs organes de roulement étant prévus, ces derniers organes s'engageant dans des cavités chaque fois opposées l'une à l'autre ménagées dans des faces latérales voisines de l'élément conique (68') et du plateau de pression (84'), tous ces éléments correspondant à ceux prévus sur l'autre côté du porte-baladeur (16) et permettant une synchronisation entre le premier et le troisième organes rotatifs (12, 64).

23. Dispositif suivant la revendication 22, caractérisé en ce que des ressorts (120) montés sous tension entre les deux bagues de verrouillage (42, 42') s'opposent à un déplacement axial de ces deux bagues de verrouillage par coulissement à l'écart l'une de l'autre.

24. Dispositif suivant la revendication 23, caractérisé en ce que les ressorts (120) s'étendent à travers des perçages (122) prévus dans le porte-baladeur (16) et dans les deux bagues de verrouillage (42, 42') et sont immobilisés par leurs extrémités (124, 124') chaque fois sur les faces latérales extérieures des deux bagues de verrouillage.

## Claims

1. A synchronizer (10) for synchronizing first and second rotatable members (12, 14) rotating about a common axis (a-a), said synchronizer comprising:
— a clutch gear (16) fixed onto said first (12) of the two rotatable members (12, 14) for rotation therewith and having a toothed outer circumference (20);
— a shifter collar (36) having a toothed inner surface (38) engaging said toothed outer circumference (20) of said clutch gear (16) and movable axially thereon;
— a blocking ring (42) positioned adjacent to said clutch gear (16) and movable axially thereto, having a toothed outer surface (46), a friction surface (44) and claw means (48) for a limited rotation between said clutch gear (16) and said blocking ring (42);
— a gear ring (50) fixed to said second rotatable member (14) for rotation therewith and having a toothed outer surface (52) engaging said toothed inner surface (38) of said shifter collar (36) when said shifter collar is axially moved across said blocking ring (42) and onto said gear ring (50);
— self-energized means (68, 84, 100, 112) rotatable with said gear ring (50) and frictionally engageable by the friction surface (44) of said blocking ring (42) for transferring a frictional torque between the two rotatable members (12, 14) and responsive to such torque transfer to expand;
— a frictional member (102) acting between said gear ring (50) and said self-energized means (84, 112) to prevent relative rotation between the first and second rotatable member (12, 14) upon expansion of said self-energized means;
— whereby said friction surface (44) of said blocking ring (42) forms an inner cone, from which an outer cone (70) of an axially movable cone element (68) belonging to the self-energized means (68, 84, 100, 112) is engageable and
— whereby said self-energized means (68, 84, 100, 112) further comprises a pressure plate (84) having a plurality of recesses (92) being in alignment with corresponding recesses (78) formed in the opposite surface (74) of the cone element (68), and whereby a roller (100) is positioned between each pair of said recesses (78, 92) for axially separating said cone element (68) and said pressure plate (84) upon relative rotation therebetween:
characterized by the following features:
a) said frictional member (102) is carried on said clutch gear (16);

b) said pressure plate (84) is axially movable between gear ring (50) and cone element (68);
c) a separator plate (112) is positioned between gear ring (50) and pressure plate (84) for feeding torque into said cone element (68) and for rotation therewith;
d) said frictional member (102) is positioned between pressure plate (84) and separator plate (112) for frictional engagement therewith, whereby upon frictional engagement of said blocking ring (42) with said cone element (68) caused by axial movement therebetween, said rollers (100) react to differences in rotation between cone element (68) and pressure plate (84) to force said pressure plate (84) toward said gear ring (50) and thereby provide frictional contact between pressure plate (84) and frictional member (102) as well as between frictional member (102) and separator plate (112).

2. The synchronizer according to claim 1, wherein said cone element (68) has a first side surface (72) frictionally engageable with a side portion (73) of said clutch gear (16).

3. The synchronizer according to claim 1 or 2, wherein said pressure plate (84) includes engagement means (90) for providing rotational connection between pressure plate (84) and gear ring (50).

4. The synchronizer according to claim 3, wherein said engagement means (90) are claws.

5. The synchronizer according to claim 3 or 4, wherein said separator plate (112) has at least one notch (116) in its outer circumference (114) for permitting said engagement means (90) of said pressure plate (84) to pass and contact said gear ring (50).

6. The synchronizer according to one of the preceding claims, wherein a biasing means (81) is attached between said cone element (68) and pressure plate (84) to yieldably urge both parts (68, 84) toward each other.

7. The synchronizer according to one of the preceding claims, wherein said clutch gear (16) has in its outer circumference a plurality of equally spaced notches (24) formed therein and aligned parallel to the central axis (a-a) of said first rotatable member (12), in each of said notches a detent mechanism (28) being positioned perpendicular to said toothed outer circumference (20) of said clutch gear (16) and being movable parallel to the central axis (a-a) of said clutch gear and perpendicular thereto.

8. The synchronizer according to claim 7, wherein each detent mechanism (28) includes a guide (30), a spring (34) and a plunger (32).

9. The synchronizer according to one of the preceding claims, wherein said frictional member (102) has frictional surfaces (108, 110) frictionally engageable with a surface of said separator plate (112) and with said second side surface (88) of said pressure plate (84), respectively, upon axial movement of said pressure plate.

10. The synchronizer according to one of the preceding claims, wherein said frictional member (102) is a frictional coupling disc.

11. The synchronizer according to claim 10, wherein the frictional coupling disc (102) is splined to said clutch gear (16) and axially movable thereto.

12. The synchronizer according to one of the preceding claims, wherein the claws (48) of said blocking ring (42) engage notches (22) spaced in the same angular distance in the outer circumference of said clutch gear (16).

13. The synchronizer according to one of the preceding claims, wherein each of said recesses (78, 92) in said cone element (68) and said pressure plate (84), respectively, contains inclined sides (80, 94).

14. The synchronizer according to claim 13, wherein each recess (78, 92) includes two opposed inclined sides (80, 94).

15. The synchronizer according to claim 14, wherein the inclination of said inclined sides (80, 94) is from 10 to 45 degrees, when measured from said second side surface (74) of the cone element (68) and from the first side surface (86) of the pressure plate (84), respectively.

16. The synchronizer according to claim 15, wherein said inclination is from 20 to 40 degrees.

17. The synchronizer according to claim 15 or 16, wherein said inclination is 35 degrees.

18. The synchronizer according to one of the preceding claims, wherein said rollers (100) are balls.

19. The synchronizer according to claim 18, wherein the diameter of each ball (100) is greater than twice the depth of any of said recesses (78, 92).

20. The synchronizer according to one of the preceding claims, wherein the conical friction surface (70) of said cone element (68) is inclined approximately 5 to 10 degrees.

21. The synchronizer according to claim 20, wherein said inclination is approximately 6,5 degrees.

22. The synchronizer according to one of the preceding claims, wherein a third rotatable member (64) is coaxially aligned with said first rotatable member (12) and is positioned adjacent to said clutch gear (16) opposite to said second rotatable member (14), whereby there are present a blocking ring (42'), a cone element (68'), a pressure plate (84'), a frictional member (102'), a separator plate (112'), a gear ring (50') secured to said third rotatable member (64), and a plurality of roller means, engaging corresponding and oppositely aligned recesses formed in adjacent side surfaces of the cone element (68') and said pressure plate (84'), whereby all said parts correspond to those on the other side of said clutch gear (16) and permit a synchronisation between said first and third rotatable member (12, 64).

23. The synchronizer according to claim 22, wherein springs (120) are attached between said two blocking rings (42, 42') for preventing axial separation therebetween.

24. The synchronizer accordind to claim 23, wherein said springs (120) extend through bores (122) in said clutch gear (16) and in both of said blocking rings (42, 42'), said springs having ends (124, 124') attached to the outer side surface of said blocking rings.

FIG. 1

0 086 875

FIG. 2

15

FIG. 3

# FIG. 4

FIG. 5

0 086 875

FIG. 7

FIG. 6

23

0 086 875

FIG. 8

FIG. 10

FIG. 9

25

FIG. II

FIG. 12

## FIG. 13